Europäisches Patentamt

European Patent Office

Office européen des brevets

(11) Veröffentlichungsnummer: **0 260 531**
**A2**

(12) **EUROPÄISCHE PATENTANMELDUNG**

(21) Anmeldenummer: **87112812.0**

(22) Anmeldetag: **02.09.87**

(51) Int. Cl.4: **G08C 23/00** , **H04B 9/00**

(30) Priorität: **16.09.86 DE 3631509**

(43) Veröffentlichungstag der Anmeldung:
**23.03.88 Patentblatt 88/12**

(84) Benannte Vertragsstaaten:
**AT CH DE FR GB IT LI NL**

(71) Anmelder: **Beier Gmbh**
**Kapellenweg 23**
**D-7082 Oberkochen(DE)**

(72) Erfinder: **Vogel, Hartmut, Dipl.-Ing.**
**Hafnerweg 3**
**D-7082 Oberkochen(DE)**
Erfinder: **Heinrich, Erwin**
**Schulstrasse 12**
**D-7087 Essingen(DE)**
Erfinder: **Meier, Paul**
**Mühlackerstrasse 9**
**D-7084 Westhausen-Reichenbach(DE)**
Erfinder: **Chrystowski, Wojciech, Dipl. Ing.**
**Pommernstrasse 12**
**D-7562 Gernsbach(DE)**

(74) Vertreter: **Ritter und Edler von Fischern,**
**Bernhard,Dipl.-Ing. et al**
**HOFFMANN - EITLE & PARTNER**
**Arabellastrasse 4**
**D-8000 München 81(DE)**

(54) **Vorrichtung zur Messung von Parametern von sich drehenden Teilen.**

(57) Eine Vorrichtung zur Messung von Parametern von sich drehenden Teilen enthält auf dem Drehteil eine elektrische Parameter-Detektorvorrichtung und eine Impulserzeugungsschaltung, deren Signale eine von der Parametergröße abhängige Frequenz aufweisen, des weiteren eine erste Wandlereinrichtung zur berührungslosen Übertragung einer Versorgungsspannung vom stationären Vorrichtungsteil zur Parameter-Detektorvorrichtung und zur Impulserzeugungsschaltung des Drehteils, und eine zweite Wandlereinrichtung zur berührungslosen Übertragung der Parameterimpulse zu einer stationären Auswerteschaltung. Die erste und zweite Wandlereinrichtung weist jeweils ringförmige, einander zugekehrte Reflektoren auf, in denen elektro-optische bzw. opto-elektrische Wandlerelemente angeordnet sind. Die Abstände der einzelnen Wandlerelemente der ersten Wandlereinrichtung sind derart, daß während der Drehung auf der Drehteilseite eine Gleichspannung mit einer Welligkeit, die klein ist gegenüber dem Maximalwert der Gleichspannung, zur Parameter-Detektoreinrichtung und Impulserzeugungsschaltung übertragen wird. Eine Drehwinkel-Detektorvorrichtung für das Drehteil dient der Lieferung von Drehwinkelimpulsen. Eine Modulationsschaltung weist eine Frequenzmodulationsstufe für die Parameterimpulse sowie eine durch die Parameterimpulse flanken-getriggerte Impulsweiten-Modulationsstufe für die Drehwinkelimpulse des Drehteils auf. Die Modulationsschaltung liefert ausgangsseitig serielle Parameterimpulse, in deren jeweiligen Pausenphasen die impulsweitenmodulierten Drehwinkelimpulse liegen.

EP 0 260 531 A2

FIG.4

la.

## Vorrichtung zur Messung von Parametern von sich drehenden Teilen

Die Erfindung betrifft eine Vorrichtung zur Messung von Parametern von sich drehenden Teilen mit jeweils einer auf dem Drehteil vorgesehenen elektrischen Parameter-Detektorvorrichtung und einer Impulserzeugungsschaltung, deren Signale eine von der Parametergröße abhängige Frequenz aufweisen, mit einer ersten Wandlereinrichtung zur berührungslosen Übertragung einer Versorgungsspannung vom stationären Vorrichtungsteil zur Parameter-Detektorvorrichtung und zur Impulserzeugungsschaltung des Drehteils und mit einer zweiten Wandlereinrichtung zur berührungslosen Übertragung der Parameterimpulse zu einer stationären Auswerteschaltung.

Aus der DE-PS 21 48 493 ist eine Einrichtung zur Drehmomentmessung bekannt. Zwischen einem Bremsaggregat und einem Prüfling befindet sich eine Meßwelle mit einem Versorgungsnetzteil, einer Brückenschaltung mit Dehnungsmeßstreifen und mit einem Impulsgenerator. Die Übertragung der Versorgungsspannung erfolgt induktiv als Wechselspannung, die dann im Netzteil gleichgerichtet wird. Die Übertragung der Impulse des Impulsgenerators zur stationären Auswerteschaltung erfolgt kapazitiv. Die am Ausgang der Brückenschaltung auftretende Spannung ändert die Frequenz des Impulsgenerators in Abhängigkeit von der Größe des Drehmomentes der Meßwelle. In der Auswerteschaltung wird die kapazitiv übertragene Signalkombination in eine Gleichspannung umgewandelt und zur Kalibrierung mit einer Nullpunkt-Einstellungsspannung korrigiert. Das Summensignal wird dann in ein frequentes Signal rückgewandelt und zu einer Grundfrequenz hinzuaddiert. Dieser Frequenzkorrekturwert wird einem Vorwärts-Rückwärtszähler zugeführt, der außerdem durch ein Taktwerk angesteuert wird. Der Vorwärts-Rückwärtszähler gestattet ein Ablesung der gemessenen Größe.

Mit Hilfe dieser bekannten Einrichtung zur Drehmomentenmessung sind zwar Drehmomentenwerte berührungslos vom Drehteil zum stationären Teil übertragbar. Auch gestattet die bekannte Einrichtung die berührungslose Versorgungsenergie-Übertragung vom stationären Teil auf die Meßwelle. Jedoch weist diese bekannte Einrichtung den Nachteil auf, daß auf dem Drehteil eine Gleichrichtung der übertragenen Wechselspannung erfolgen muß, was einen zusätzlichen Schaltungsaufwand auf der Meßwelle bedeutet. Ein weiterer Nachteil ist darin zu sehen, daß eine induktive Übertragung der Versorgungspannung vom stationären Teil auf die Meßwelle ungünstig ist dann, wenn die Drehung der Meßwelle vergleichsweise langsam erfolgt. Eine langsame Meßwellendrehung ist beispielsweise bei Schraubwerkzeugen notwendig, bei denen das Drehmoment in Abhängigkeit von der Winkeldrehung der Meßwelle erfolgt. Ein weiterer Nachteil ist darin zu sehen, daß die Meßsignale in einer aufwendigen Auswerteschaltung verarbeitet werden. Insbesondere ist es nachteilig, daß die Frequenz-Meßsignale in der Auswerteschaltung in Spannungssignale umgewandelt und nach entsprechender Verarbeitung anschließend wieder in Frequenzmeßsignale rückgewandelt werden.

Ein weiterer Nachteil der induktiven Kopplung ist darin zu sehen, daß empfindliche Schaltungsteile und Signale durch Induktionsspitzen gestört werden können. Diese können nur durch entsprechende Schutzmaßnahmen, wie z.B. Abschirmung oder Entstörung, beseitigt werden. Auch besteht die Gefahr, daß Meßleitungen, die in der Nähe vorbeigeführt sind, induktive Übersprechimpulse erhalten können. Zur Verbesserung des Wirkungsgrades muß der Abstand zwischen dem stationären und dem sich drehenden Teil des induktiven Gliedes klein sein.

Bei der kapazitiven Kopplung muß der dielektrische Abstand ebenfalls gering gehalten werden. Toleranzbedingte Abstandsschwankungen gehen auf die Signalgröße ein.

Ein weiterer Nachteil ist darin zu sehen, daß keine Überwachung der Parameter-Detektoreinrichtung (Dehnungsmeßstreifenbrücke) vorgesehen ist.

Der Erfindung liegt daher die Aufgabe zugrunde, eine Vorrichtung zur Messung von Parametern von sich drehenden Teilen der eingangs genannten Art zu schaffen, mit deren Hilfe in einfacher und zuverlässiger Weise einerseits auch bei langsamer Drehung des Drehteiles eine berührungslose Gleichspannungs-Übertragung zu den Schaltungsteilen des Drehteiles und andererseits eine störunanfällige Erzeugung, Übertragung und Auswertung der Parametersignale in Abhängigkeit von der Drehung des Drehteils in digitaler Weise erfolgt.

Gelöst wird diese Aufgabe erfindungsgemäß dadurch, daß

-die erste und zweite Wandlereinrichtung jeweils ringförmig angeordnete elektro-optische bzw. opto-elektrische Wandlerelemente aufweist, wobei die Wandlerelemente in der ersten Wandlereinrichtung derart ausgebildet und angeordnet sind, daß während der Drehung auf der Drehteilseite eine Gleichspannung mit einer Welligkeit, die klein ist gegenüber dem Maximalwert der Gleichspannung, zur Parameter-Detektoreinrichtung und Impulserzeugungsschaltung übertragen wird,

-daß eine Drehwinkel-Detektorvorrichtung für das Drehteil zur Lieferung von Drehwinkelimpulsen vorgesehen ist und

-daß eine Modulationsschaltung vorhanden ist, die eine Frequenzmodulationsstufe für die Parameterimpulse sowie eine durch die Parameterimpulse flanken-getriggerte Impulsweiten-Modulationsstufe für die Drehwinkelimpulse des Drehteil aufweist und die ausgangsseitig serielle Parameterimpulse liefert, in deren jeweiligen Pausenphasen die impulsweiten-modulierten Drehwinkelimpulse liegen.

Die erfindungsgemäße Vorrichtung weist den Vorteil auf, daß mit Hilfe der opto-elektrischen und elektro-optischen Wandlerelemente der ersten Wandlereinrichtung eine wellige Gleichspannung übertragen wird, deren Welligkeit vergleichsweise gering ist gegenüber dem Maximalwert der Gleichspannung. Auf diese Weise werden aufwendige Gleichrichter-Anordnungen auf der Drehteilseite vermieden. Auch ist es vorteilhaft, daß mit Hilfe der Wandlerelemente eine sichere Energieübertragung als Gleichspannung berührungslos erfolgt. Ein weiterer Vorteil ist darin zu sehen, daß die Parameterimpulse in digitaler Weise drehungsabhängig seriell erzeugt werden und daß die Impulspausenphasen der frequenten Parametersignale dazu verwendet werden, um die Drehwinkelimpulse des Drehteiles aufzunehmen. Als Parameter können auf dem Drehteil Drehmomentenwerte im Wege der Dehnungsmessung, Temperaturwerte, Drücke und dgl. gemessen werden. Auch ist es möglich, als Parameter die Dichte einer Hohlwelle zu messen. Die Parametermessung kann auch dazu dienen, die Beschleunigung eines Drehteiles zu messen. Hierbei kann die Beschleunigung durch Messung von relativen Verschiebungen erfolgen. Die Temperaturmessung kann beispielsweise dann sinnvoll sein, wenn Reibungen von Drehteilen beispielsweise in Lagern drehzahlabhängig erfaßt werden sollen. Die Parametererfassung kann beispielsweise über akustische Detektoren, optische Detektoren, induktive Detektoren, kapazitive Detektoren, ohm'sche Widerstandsdetektoren oder über mechanisch elektrische Wandler erfolgen.

In vorteilhafter Weise erfolgt auch eine exakte Übertragung der Gleichspannung von der stationären Seite auf die Drehteilseite sowie der Parameterimpulse von der Drehteilseite zur stationären Seite bei langsamen Drehungen, da die Energieübertragung nicht drehzahlabhängig ist. Ein weiterer Vorteil ist darin zusehen, daß Störimpulse, die beispielsweise bei induktiver Übertragung auftreten können, bei berührungsloser optischer Übertragung weitgehend vermieden sind.

Zwar ist aus der DE-OS 19 54 643 eine Einrichtung zur Meßwertübertragung zwischen gegeneinander sich drehenden Teilen bekannt. Jedoch weist diese bekannte Einrichtung den Nachteil auf, daß die Stromversorgung über Schleifer und Bürsten erfolgt, während die Signalübertragung in digitaler Form über optische Geber und Nehmer geschieht. Berührungs-Geber und -Empfänger weisen den Nachteil auf, daß im Wege der Abnutzung und Verschmutzung Schwankungen auftreten können, die nur schwer reproduzierbar sind. Diese bekannte Einrichtung ist daher für die erfindungsgemäße Anwendung nicht geeignet.

Auch ist eine aus der DE-OS 22 62 258 bekannte Anordnung zur drahtlosen Meßwertübertragung von bewegten, insbesondere rotierenden Objekten zur stationären Seite nicht für die erfindungsgemäße Vorrichtung zur Messung von Parametern von sich drehenden Teilen geeignet. Diese bekannte Einrichtung überträgt zwar Meßwerte auf optischem Wege vom bewegten Teil zum feststehenden Teil. Jedoch erfolgt die Stromversorgung der Schaltungsteile des Drehteiles durch eine auf dem Drehteil vorgesehene Batterie. Hierdurch ergibt sich der Nachteil, daß eine Überwachung der Batteriespannung nur mit zusätzlichem Aufwand möglich ist.

Daher beinhaltet die Erfindung eine funktionssichere, störunempfindliche Gleichspannungs-Übertragung vom feststehenden Teil zum Drehteil auch bei geringer Geschwindigkeit des Drehteiles, sowie eine sichere Auswertung der Parametersignale in Abhängigkeit von der Parametergröße und in Abhängigkeit von der Drehung des Drehteiles in einem seriellen Impulszug.

Gemäß weiterer Ausbildung weisen die erste und zweite Wandlereinrichtung jeweils ringförmige, einander zugekehrte Reflektoren auf, in denen die elektro-optischen bzw. opto-elektrischen Wandlerelemente angeordnet sind, wobei die Abstände der einzelnen Wandlerelemente in der ersten Wandlereinrichtung derart sind, daß während der Drehung auf der Drehteilseite eine Gleichspannung mit einer Welligkeit, die klein ist gegenüber dem Maximalwert der Gleichspannung, zur Parameter-Detektoreinrichtung und Impulserzeugungsschaltung übertragen wird.

Gemäß weiterer Ausgestaltung sind die opto-elektronischen Wandlerelemente der ersten Wandlereinrichtung als Aktivelemente in Reihe geschaltet.

In vorteilhafter Weise sind die elektro-optischen Wandlerelemente Laserdioden und die opto-elektrischen Wandlerelemente der ersten Wandlereinrichtung Solarzellen, während die opto-elektrischen Wandlerelemente der zweiten Wandlereinrichtung Photodioden oder Phototransistoren oder Photowiderstände sind.

Gemäß weiterer Ausgestaltung sind die Abstände der einzelnen Wandlerelemente der ersten Wandlereinrichtung derart gewählt, daß die durch ihre Richtcharakteristik bedingten Intensitätsschwankungen und damit die Welligkeit der Gleichspannung während der Drehung des Drehteiles kleiner oder gleich 10 % des Maximal-Energiewertes sind.

In vorteilhafter Weise sind die opto-elektrischen bzw. elektro-optischen Wandlerelemente in jeweils gleichen radialen Abständen angeordnet.

In besonders vorteilhafter Weise weisen die ringförmigen Reflektoren jeweils einen halb-elliptischen Querschnitt auf, wobei die opto-elektrischen bzw. elektro-optischen Wandlerelemente jeweils im Bereich des Scheitelpunktes oder Brennpunktes der Reflektoren angeordnet sind.

Um nun außerdem den Stromverbrauch der auf dem Drehteil befindlichen Schaltungselemente gering zu halten, wird die drehteilseitige übertragene Gleichspannung durch eine Glättungsstufe stabilisiert und nachfolgend einem Halbleiterschalter zugeführt, welcher durch einen Taktgenerator mit festem Impulsphasen-Impulspausen-Verhältnis angesteuert wird. Hierdurch erfolgt im Takt der Impulse des Taktgenerators eine impulsweise Bestromung der Schaltungselemente des Drehteiles mit dem Vorteil, daß ein Stromverbrauch nur während der Impulsphasen der Taktimpulse erfolgt.

In vorteilhafter Weise wird durch den Taktgenerator auch eine Abtast-und Halteschaltung der Impulserzeugerschaltung getaktet. Auch für diese Abtast-und Halteschaltung ergibt sich der Vorteil eines verringerten Stromverbrauches, da nur während der Impulsphasen Strom fließt. Vorzugsweise beträgt das Impulsphasen-Impulspausen-Verhältnis der Impulse des Taktgenerators 20:80. Hiervon ist die Abtast-und Halteschaltung eingangsseitig mit durch den Taktgenerator steuerbaren Halbleiterschaltern versehen, welche im Takt der Impulse des Taktgenerators die Abtast-und Halteschaltung eingangsseitig durchsteuern und sperren.

Die Abtast-und Halteschaltung besteht aus zwei Speicherstufen mit je einem nachgeordneten Operationsverstärker, wobei die beiden Operationsverstärker mit je einem Eingang einer Differenzstufe verbunden sind.

Gemäß einer weiteren Ausgestaltung ist eine Parameter-Prüfstufe mit einem elektrischen Kalibrierelement vorgesehen, welches einen vorgegebenen Wert aufweist. Dieses Kalibrierelement ist der Parameter-Detektorvorrichtung während der Kalibrierung zugeschaltet. Hierdurch ergibt sich der Vorteil, daß während der Zuschaltung des Kalibrierelementes ein vorgegebener Parameterwert simuliert wird, welcher durch die Auswerteschaltung im Wege eines Istwert-Sollwert-Vergleiches geprüft und nachvollzogen wird. Ist bei Zuschaltung des Kalibrierelementes das entsprechend simulierte Parametersignal nicht gleich dem vorgegebenen Sollwertsignal, so wird hierdurch angezeigt, daß eine Neueinstellung der Parameter-Detektoreinrichtung zu erfolgen hat bzw. daß ein Fehler aufgetreten ist.

In vorteilhafter Weise ist das elektrische Kalibrierelement durch eine Logikschaltung wirksam - schaltbar, wenn in einer Vergleichsstufe die Gleichheit eines über die erste Wandlereinrichtung übertragenen Kalibriersignales mit einem Kalibrier-Sollwertsignal festgestellt wird. Diese Logikschaltung befindet sich vorzugsweise auf dem Drehteil. Hierdurch ergibt sich der Vorteil, daß gewissermaßen im Sinne einer Torschaltung nur bei Auftreten des Kalibriersignales eine Zuschaltung des Kalibrierelementes erfolgt, was nach der entsprechenden erfolgreichen Vergleichsmessung erfolgt. Eine solche Vergleichsstufe kann ein digitales Filter enthalten, welches nur solche Digitalimpulse durchläßt, die einerseits eine bestimmte Frequenz und andererseits ein bestimmtes Impulsphasen-Impulspausen-Verhältnis aufweisen. Daher ist das Kalibriersignal eine Impulsfolge mit einer vorgegebenen Frequenz und einem vorgegebenen Tastverhältnis, wobei die Kalibrierimpulsfolge der Versorgungs-Gleichspannung überlagert und vor der Parameter-Detektorvorrichtung und der Impulserzeugungsschaltung vorgeschalteten Glättungsstufe abgezweigt wird.

In vorteilhafter Weise ist das Kalibrierelemente ein Festwiderstand, welcher durch einen durch das Kalibriersignal steuerbaren Halbleiterschalter zur Parameter-Detektorvorrichtung zuschaltbar ist.

Das Impulsphasen-Impulspausen-Verhältnis der Kalibrierimpulse beträgt 90:10.

Die Kalibrierimpulse werden gemäß weiterer Ausgestaltung im stationären Teil der Meßvorrichtung erzeugt. Die Modulationsschaltung ist entweder auf dem Drehteil oder stationär angeordnet.

Die von der Parametergröße abhängige Frequenz der Parameterimpulse wird bei konstanter Impulsphasenzeit durch Änderung der Impulspausenzeit gesteuert. Hierdurch ergibt sich der Vorteil einer energiearmen Übertragung der Parameterimpulse vom Drehteil zum stationären Teil der Auswerteschaltung. Somit werden jeweils Impulse mit konstanter Impulsphasenzeit erzeugt, was bewirkt, daß Lichtblitze von konstanter Dauer durch die zweite Wandlereinrichtung übertragen werden. Die jeweiligen Impulspausen ändern sich dann im Zuge der Parameteränderung.

Die Drehwinkel-Detektorvorrichtung weist eine durch die Drehmomentensignale getaktete Drehwinkellogik auf, die ausgangsseitig winkelschrittweise n-bit-Digitalimpulse abgibt, durch die nacheinander Zeitglieder mit entsprechender Zeitkonstante für die jeweilige Impulsweite einschaltbar sind.

Vorzugsweise wird die Vorrichtung bei Schraubwerkzeugen eingesetzt und dient hierbei als Aktionsaufnehmer. Sie wird zur winkelabhängigen Drehmomentenmessung zwischen einem Schraubwerkzeuggetriebe und einem Schraubwerkzeugabtrieb eingesetzt. Als Drehteil wird in vorteilhafter Weise eine Hohlwelle eingesetzt, deren Wandstärke den Drehmomenten-Meßbereich festlegt. Hierdurch wird in vorteilhafter Weise die Beurteilung der Qualität beim Herstellen einer Schraubverbindung in der Serienmontage in einfacher und sicherer Weise möglich.

Durch unterschiedliche Hohlkörper-Gestaltung lassen sich Aktionsaufnehmer realisieren für Drehmomente bis 1000 Nm. Für diesen Drehmomentenbereich werden unterschiedliche Meßwellen verwendet. Dies bedeutet, daß der vorgenannte Drehmomentenbereich in Unterbereiche unterteilt wird, wobei jedem Unterbereich eine bestimmte Meßwelle zugeordnet ist. In vorteilhafter Weise lassen sich diese Aktionsaufnehmer-Einheiten mit der Meßwelle mühelos zwischen die Antriebsgruppe und die Abtriebsgruppe einfügen. Durch diese Technik wird gewährleistet, daß die auf der Welle aufgesetzten und verwendeten Schaltungskomponenten gleich sind. Die Anpassung erfolgt lediglich durch die entsprechende Wahl der Wandstärke der Meßwelle. Die Ringreflektoren weisen eine gute Verspiegelung auf, so daß in Verbindung mit der Abstandswahl der benachbarten Wandlerelemente in der ersten Wandlereinrichtung optische Lücken vermieden werden. Die getaktete Gleichspannungs-Energieversorgung ergibt den Vorteil einer Verlustleistungs-Reduzierung und damit den Vorteil einer erhöhten Lebensdauer der beteiligten Schaltungselemente auf dem Drehteil. Auch ist der Vorteil gegeben, daß keine festen Referenzspannungen verwendet werden. Es wird nur mit relativen Spannungen gearbeitet, so daß die Vorrichtung unempfindlich gegen Spannungsschwankungen wird. Das Kalibrierelement ist derart bemessen, daß es beispielsweise 80 % des Nenn-Drehmomentes simuliert.

Im folgenden wird die Erfindung anhand eines in den Figuren 1 bis 12 dargestellten Ausführungsbeispiels beschrieben. Hierbei wird als Parameter das Drehmoment eines Aktionsaufnehmers eines Schraubwerkzeuges gemessen. Es zeigen:

Fig. 1 in schematischer Darstellung eine Drehmomenten-Meßvorrichtung mit Auswertegerät,

Fig. 2 in schematischer Darstellung und geschnitten den Aktionsaufnehmer gem. Fig. 1,

Fig. 3 in schematischer Blockschaltbild-Darstellung den Aktionsaufnehmer,

Fig. 4 in schematischer Darstellung die Schaltungsanordnung zur Gleichspannungs-Übertragung und Signalübertragung und Signalauswertung,

Fig. 5 in schematischer Darstellung Wandlerelemente einer Wandlereinrichtung und deren Abstände für eine vorgegebene Charakteristik,

Fig. 6a und 6b eine ringförmige Spiegelanordnung mit Wandlerelementen,

Fig. 7 die elektrische Verbindung der Wandlerelemente der ersten Wandlereinrichtung auf dem Empfangsseite,

Fig. 8 eine Lichtschranken-Anordnung zur Drehwinkel-Ermittlung in schematischer Darstellung,

Fig. 9 die drehwinkel-abhängigen Impulse zweier Lichtschranken,

Fig. 10 die Wahrheitstabelle einer Drehwinkellogik,

Fig. 11a und 11b Drehmomentenimpulse und durch diese flanken-getriggerte Drehwinkelimpulse und

Fig. 12a 12b und 12c je einen Drehmomenten-Drehwinkelimpulszug als frequenzmodulierte und impulsweiten-modulierte Impulsfolge.

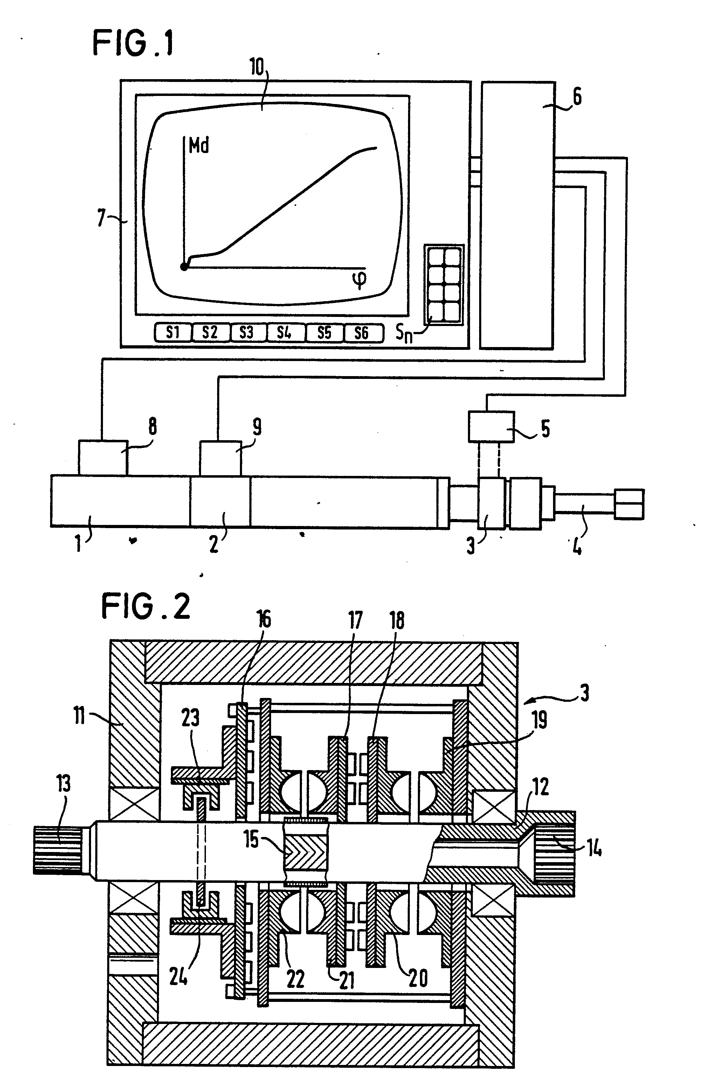

Gemäß Fig. 1 ist mit (1) ein geregelter elektromotorischer Gleich-oder Wechselstromantrieb bezeichnet, der mit einer Kupplung (2) für Getriebeumschaltung verbunden ist. Mit (3) ist ein Aktionsaufnehmer bezeichnet, der einerseits die Drehmomenten-Reaktionsaufnahme und andererseits eine Drehwinkelmessung gestattet. Mit (4) ist ein Abtrieb bezeichnet. Der Aktionsaufnehmer (3) ist elektrisch mit einer Auswerteschaltung (5) verbunden, welche stationär angeordnet ist. Von dieser Auswerteschaltung (5) führt eine Verbindung zu einer Mikrocomputer-Auswerte-und Schnittstellenschaltung (6), welche mit einem Monitor (7) verbunden ist. Zur Mikrocomputer-Auswerte-und Schnittstellenschaltung (6) führen außerdem Steuerleitungen über entsprechende Aktionsaufnehmer (8) und (9) zum geregelten Antrieb (1) sowie zur Kupplung (2).

Der Monitor ist mit Bedienungstasten S1 bis S6 sowie mit weiteren Tasten Sn versehen. Auf dem Monitorbildschirm (10) ist das Drehmoment Md in Abhängigkeit vom Drehwinkel φ darstellbar.

Gemäß Fig. 2 ist in einem Aktionsaufnehmergehäuse (11) eine Hohlwelle (12) als Meßwelle gelagert. Diese Hohlwelle (12) ist mit einem Anschlußzapfen (13) versehen, die zum Getriebe des Schraubwerkzeuges führt. Auf der gegenüberliegenden Seite ist eine Innenverzahnung (14) vorgesehen, die zur Abtriebsbaugruppe des Schraubwerkzeuges führt.

Auf der Torsions-oder Meßwelle (12) ist eine Dehnungs-Meßstreifen-Anordnung (15) vorgesehen, welche als Drehmomenten-Aktionsaufnehmer dient. Anstelle einer Dehnungsmeßstreifenanordnung können auch folienartige Sensorelemente, z.B. als amorphe Metalle, verwendet werden.

Mit (16), (17) und (18) sind Leiterplatten mit elektrischen Bauelementen bezeichnet. Während die Leiterplatte (16) stationär befestigt ist, sind die Leiterplatten (17) und (18) fest mit der Meßwelle (12) verbunden.

Die erste Wandlereinrichtung besteht aus einem ersten, stationär befestigten Reflektorring (19) mit halb-elliptischem Querschnitt, deren Hauptachse parallel zur Achse der Meßwelle angeordnet ist. Diesem feststehenden Reflektorring (19) ist ein Reflektorring (20) zugeordnet, der mit der Leiterplatte (18) fest verbunden ist und somit auf der Meßwelle fixiert ist. In nicht dargestellter Weise enthalten die beiden Reflektorringe (19) und (20) elektro-optische bzw. opto-elektrische Wandlerelemente.

Mit (21) ist ein weiterer Reflektorring bezeichnet, der an der Leiterplatine (17) befestigt ist. Somit dreht sich dieser Reflektorring (21) mit der Meßwelle mit. Der Reflektorring (21) ist Bestandteil der zweiten Wandlereinrichtung. Mit (22) ist der zweite Reflektorring der zweiten Wandlereinrichtung bezeichnet. In nicht dargestellter Weise enthält der Reflektorring (21) elektro-optische Wandlerelemente, während der Reflektorring (22) opto-elektrische Wandlerelemente aufweist.

Mit (23) ist eine Lichtschranken-Anordnung bezeichnet, wobei die opto-elektrischen Elemente der Lichtschranke stationär angeordnet sind, während eine mit der Meßwelle verbundene Impulsscheibe (24) bei Drehung der Meßwelle die Lichtpfade der opto-elektrischen Elemente öffnet und schließt.

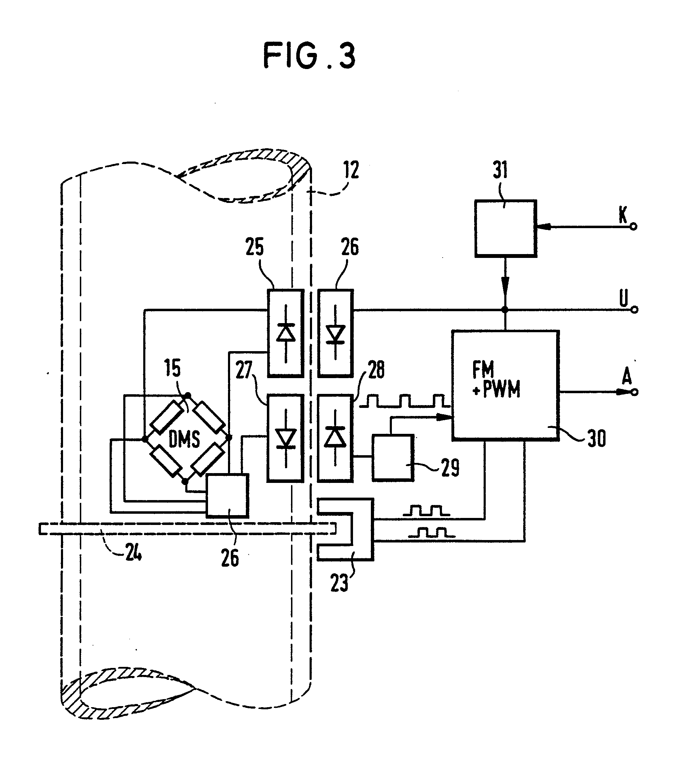

In Fig. 3 sind die den Teilen von Fig. 1 und 2 entsprechenden Teile mit gleichen Bezugszeichen versehen. Auf der Meßwelle (12) sind als optoelektrische Wandlerelemente in dem Scheitelpunkt des Reflektors (20) Solarzellen (25) angeordnet, die die Gleichspannung für die Drehmomenten-Meßstreifenanordnung (15) und für eine Impulserzeugungsschaltung (26) liefern. Mit (26) sind Laserdioden bezeichnet, die im Ringreflektor (19) angeordnet sind. Die drehmomentenabhängigen Frequenzsignale der Impulserzeugungsschaltung (26) werden Laserdioden (27) zugeführt, die innerhalb des Ringreflektors (21) angeordnet sind. Mit (28) sind Solarzellen bezeichnet, welche innerhalb des feststehenden Reflektorrings (22) vorgesehen sind. Mit (29) ist eine Impulsformerstufe bezeichnet, die mit einem ersten Eingang einer Frequenzmodulations-Impulsweitenmodulationsschaltung (30) verbunden ist. Zweite Eingänge dieser Frequenzmodulations-Impulsweitenmodulationsschaltung (30) sind mit der Drehwinkel-Lichtschrankenanordnung (23, 24) verbunden. Der Ausgang dieser Frequenzmodulations-Impulsweitenmodulationsschaltung (30) ist mit A bezeichnet. An ihm treten seriell Impulsfolgen auf, deren Frequenz ein Maß für das gemessene Drehmoment ist, während die in den Impulspausen dieser Frequenzsignale befindlichen Impulse den jeweiligen Drehwinkel der Meßwelle anzeigen, und zwar durch ihre jeweilige Impulsweite.

Mit U ist der Anschluß bezeichnet, an dem die äußere Versorgungsspannung angelegt wird. Mit (31) ist eine Kalibrierstufe bezeichnet, deren Eingang K der Kalibriereingang ist.

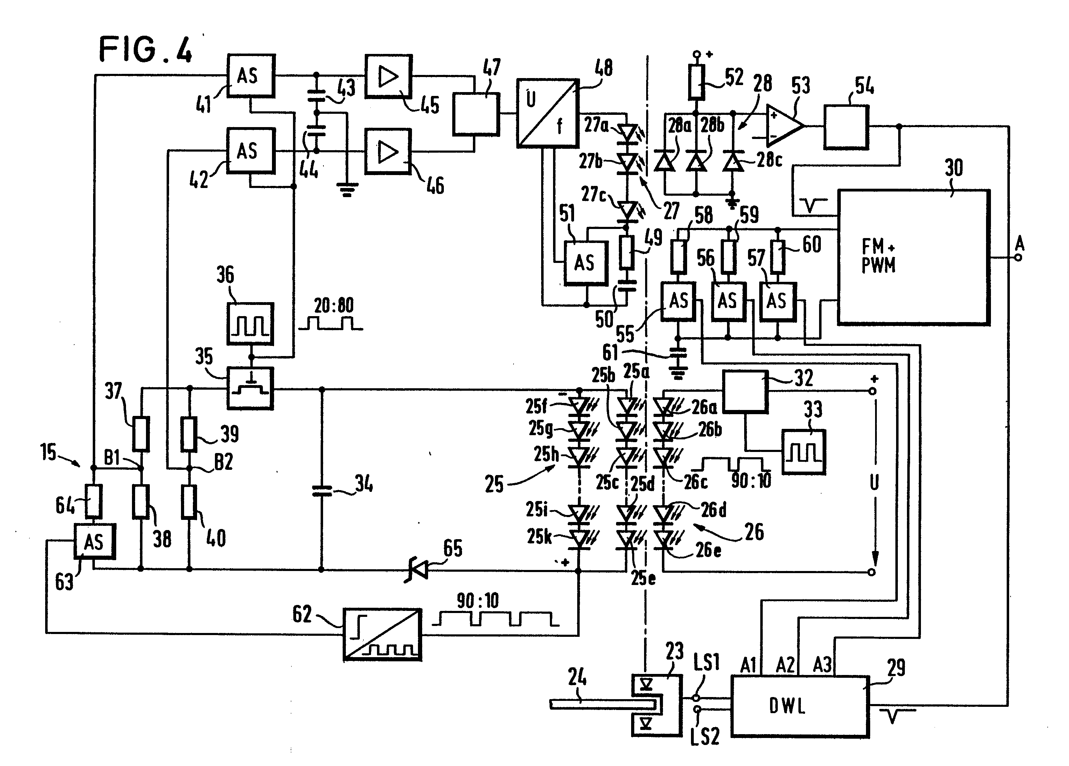

In Fig. 4 sind die den Teilen gemäß den vorhergehende Figuren entsprechenden Teile mit gleichen Bezugszeichen versehen.

Die Versorgungs-Gleichspannung U liegt an einem steuerbaren Halbleiterschalter (32) an, über den die Gleichspannung U an die Laserdioden (26) schaltbar ist. Im vorliegenden Falle sind zwölf Laserdioden in Reihe geschaltet, die gemäß Fig. 4 mit (26a, 26b, 26c ... 26d und 26e) bezeichnet sind. Der Halbleiterschalter (32) ist durch einen Taktgenerator (33) ansteuerbar, der ein Impulsphasen-Impulspausen-Verhältnis von 90:10 aufweist. Seine Frequenz beträgt 10 kHz.

Auf der Drehmeßwellenseite sind vierundzwanzig Solarzellen (25) angeordnet, welche in zwei Gruppen unterteilt sind. Jede Gruppe besteht aus zwölf Solarzellen. Die Solarzellen der ersten Gruppe sind mit (25a, 25b, 25c ... 25d und 25e) bezeichnet, während die Solarzellen der zweiten Gruppe mit (25f, 25g, 25h ... 25i und 25k) bezeichnet sind. Der Solarzellen-Anordnung (25) ist eine Glättungskondensator (34) nachgeordnet.

Mit (35) ist ein steuerbarer Halbleiterschalter bezeichnet, der eingangsseitig mit einem Taktgenerator (36) verbunden ist. Dieser Taktgenerator weist eine Frequenz von 10 kHz und ein Impulsphasen-Impulspausen-Verhältnis von 20:80 auf. Der steuerbare Halbleiterschalter (35) liegt zwischen der Solarzellengruppe (25) und der Dehnungsmeßstreifen-Brückenschaltung (15), die aus Widerständen (37, 38, 39 und 40) besteht. Bei Beanspruchung der Meßwelle erfolgt eine Änderung der Widerstandwerte der Widerstände, wodurch eine entsprechend große Brückenspannung zwischen den Brückenpunkten B1 und B2 erzeugt wird.

Der Brückenpunkt B1 ist mit einem steuerbaren Halbleiterschalter (41) verbunden, der durch den Taktgenerator (36) steuerbar ist. Der Brückenpunkt B2 ist mit einem steuerbaren Halbleiterschalter (42) verbunden, der ebenfalls durch den Taktgenerator (36) angesteuert wird. Zwischen den beiden Ausgängen der steuerbaren Halbleiterschalter (41) und (42) ist eine Reihenschaltung aus 2 Speicherkondensatoren (43) und (44) vorgesehen, deren Mittenabgriff geerdet ist.

Im Ausgangszweig des Halbleiterschalters (41) befindet sich ein Operationsverstärker (45), während im Ausgangszweig des steuerbaren Halbleiterschalters (42) ein Operationsverstärker (46) angeordnet ist. Der Ausgangs des Operationsverstärkers (45) führt zu einem ersten Eingang einer Differenzstufe (47), während deren zweiter Eingang mit dem Ausgang des zweiten Operationsverstärkers (46) verbunden ist.

Der Ausgang der Differenzstufe (47) ist mit einem Spannungsfrequenzwandler (48) verbunden, deren Frequenz spannungsabhängig Frequenzsignale erzeugt, die ein Maß für die Verstimmung der Brückenschaltung (15) ist. Der Ausgang dieses Spannungsfrequenzwandlers ist mit der Laserdiodengruppe (27) verbunden, welche im Reflektorring (21) angeordnet sind. Diese Laserdiodengruppe enthält drei in Reihe geschaltete Laserdioden (27a, 27b und 27c). Die Laserdioden (27a bis 27d) sind mit einem Zeitglied in Reihe geschaltet, welches aus einem Widerstand (49) und einem Kondensator (50) besteht. Parallel zum Zeitglied ist ein steuerbarer Halbleiterschalter (51) angeordnet, welcher durch Ausgangssignale der Spannungsfrequenz-Wandlerstufe (48) steuerbar ist. Die Ausgangssignale der Spannungsfrequenz-Wandlerstufe (48) sind Impulse, deren Anzahl pro Sekunde das Maß für das zu erfassende Drehmoment darstellen. Um den Energieverbrauch auf ein Minimum zu halten, wird die optische Übertragungsstrecke der Laserdioden (27a bis 27c) derart getaktet, daß nur Lichtblitze mit vorgegebener Dauer entstehen, die bestimmt ist durch die Zeitkonstante des Zeitgliedes (49, 50). Der steuerbare Halbleiterschalter (51) erlaubt eine getaktete Entladung des Zeitkondensators (50), wodurch mit jedem Impuls am Ausgang der Spannungsfrequenz-Wandlerstufe ein neuer Stromimpuls für die Laserdioden wirksam wird.

Die im Reflektorring (22) angeordneten optoelektronischen Elemente (28) sind drei parallel geschaltete, passive Photoempfänger (28a, 28b und 28c). Sie sind mit einem Widerstand (52) in Reihe geschaltet. Der Widerstand (52) ist mit dem Pluspol einer nicht dargestellten Spannungswelle verbunden. Auf diese Weise wird eine elektrische Vorspannung für die drei Infrarot-Photodioden (28a bis 28c) erzielt, wodurch die Signalempfindlichkeit erhöht wird. Den drei Infrarot-Photodioden (28a bis 28c) ist ein Operationsverstärker (53) nachgeordnet, der mit einer Impulsstufe (54) ausgangsseitig verbunden ist. Die Impulsstufe (54) liefert Flankenimpulse einerseits an die Frequenz-Pulsweiten-Modulationsstufe (30) und andererseits and die Drehwinkellogik (29).

Die Drehwinkellogik (29) weist zwei Eingänge LS1 und LS2 auf. Jeder Eingang ist mit einer Lichtschranke (23) verbunden. Der Einfachheit halber ist nur eine Lichtschranke dargestellt. Die Drehwinkellogik (29) weist drei Ausgänge (A1, A1 und A3) auf. Der Ausgang A1 ist mit einem steuerbaren Halbleiterschalter (55) verbunden. Der Ausgang A2 ist mit einer steuerbaren Halbleiterschalter (56) verbunden, während der Ausgangs A3 an einen Halbleiterschalter (57) angeschlossen ist. Die Signale an den Ausgängen A1 bis A3 der Drehwinkellogik (29) steuern die Halbleiterschalter (55 bis 57). Durch die Halbleiterschalter (55 bis 57) sind Widerstände (58, 59 und 60) in Reihe schaltbar mit einem Ladekondensator (61). Die Widerstände (58 bis 60) bilden mit dem Ladekondensator (61) eine Zeitgliedstufe, wobei in Abhängigkeit vom Schaltzustand dieser Halbleiterschalter (55 bis 57) das Zeitverhalten bzw. die Zeitkonstante entsprechend einstellbar ist. Durch den Wert der Zeitkonstanten der Zeitgliedstufe (58 bis 61) ist die Impulsweite der drehwinkel-abhängigen Impulse einstellbar.

Den Solarzellen (25a bis 25k) ist eine Digital-Filterlogikschaltung (62) nachgeordnet, deren Ausgang mit einem steuerbaren Halbleiterschalter (63) verbunden ist, durch den ein Widerstand (64) parallel zum Brückenwiderstand (38) der Drehmomenten-Meßstreifenanordnung (15) schaltbar ist. Mit (65) ist eine Schottky-Diode bezeichnet, die die Aufgabe hat, die Eingangssignale für die digitale Filterlogikschaltung (62) von der Brückenschaltung (15) zu entkoppeln.

Die durch den Taktgenerator (33) erzeugten, der Gleichspannung U überlagerten Kalibrierimpulse werden der digitalen Filterlogikschaltung (62) zugeführt und dort mit Sollwertimpulsen verglichen. Bei Übereinstimmung der Impulse wird ein Ausgangssignal erzeugt, das den steuerbaren Halbleiterschalter (63) durchsteuert, woraufhin der Widerstand (64) parallel zum Brückenwiderstand (38) geschaltet wird. Der Widerstandswert des Widerstands (64) ist derart bemessen, daß er bei Zuschaltung ein Drehmoment mit einem Wert von 80 % des Nenndrehmomentes simuliert. Wie bereits eingangs erwähnt, weist die Kalibrierimpulsfolge eine Frequenz von 10 kH und ein Tastverhältnis von 90:10 auf. Die Filterlogikschaltung erkennt die Kalibriersignale im Sinne einer Vergleichsprüfung und schaltet entsprechend einer Torschaltung den steuerbaren Halbleiterschalter (63) bei Übereinstimmung von Frequenz-und Tastverhältnis mit dem Sollwertsignal durch.

Die Operationsverstärker (45, 46), die Kondensatoren (43, 44) und die Differenzschaltung (47) bilden zusammen eine Abtast-und Halteschaltung, welche im Rhythmus der Frequenz des Frequenzgenerators (36) getriggert wird. Der gemessene Drehmomentenwert wird im Takt dieser Taktimpulse aktualisiert. Durch die Taktung der Abtast- und Halteschaltung sowie der Brückenschaltung mit den Impulsen des Impulsgenerators (36) ergibt sich der Vorteil einer Reduzierung der Verbrauchsleistung, da nur während der Impulsphasen der Impulse des Impulsgenerators (36) Strom in der Schaltungsanordnung fließt.

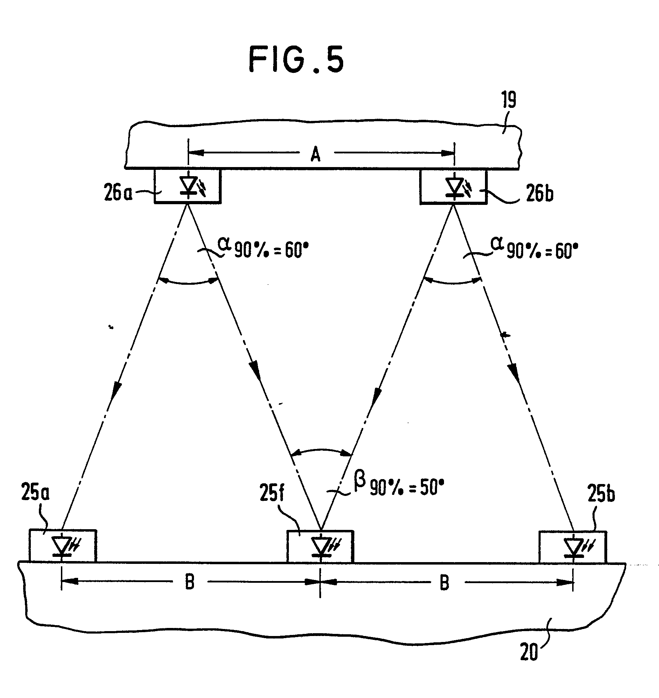

In Fig. 5 sind in schematischer Weise und teilweise der Ringreflektor (19), welcher stationär angeordnet ist, und der Ringreglektor (20) dargestellt, welcher mit der Meßwelle (12) verbunden ist. Gemäß Fig. 5 sind zwei benachbarte Laserdioden (26a und 26b) auf dem Ringreflektor (19) gezeigt. Des weiteren sind auf dem drehbaren Ringreflektor (20) drei jeweils benachbarte Solarzellen (25a, 25f und 25b) gezeigt. Die jeweils gleichen Abstände der benachbarten Laserdioden (26a, 26b) sind mit A bezeichnet. Die jeweils gleichen Abstände der benachbarten Solarzellen (25a, 25f; 25f, 25b) sind mit B bezeichnet. Diese Abstände sind so gewählt, daß unter Berücksichtigung des Abstandes der benachbarten Ringreflektoren (19 und 20) der Winkelkegel α der Laserdioden gleich 601 ist, mit einer zulässigen Energieminderung um 10 % auf 90 % = 60t und unter der Berücksichtigung, daß vierundzwanzig Laserdioden am Umfang des Ringreflektors (19) angeordnet sind. Die Solarzellen weisen einen Empfangswinkelkegel β gleich 501 auf, und zwar bei einer zulässigen Leistungsminderung um 10 % auf 90 %. Auf diese Weise erhält man für die ersten Wandleranordnung eine Welligkeit der Gleichspannung, die höchstens 10 % unterhalb des maximalen Energiewertes bzw. der maximalen Gleichspannung liegt. Diese Gleichspannung wird dann zusätzlich durch den in Fig. 4 gezeigten Glättungskondensator (34) geglättet.

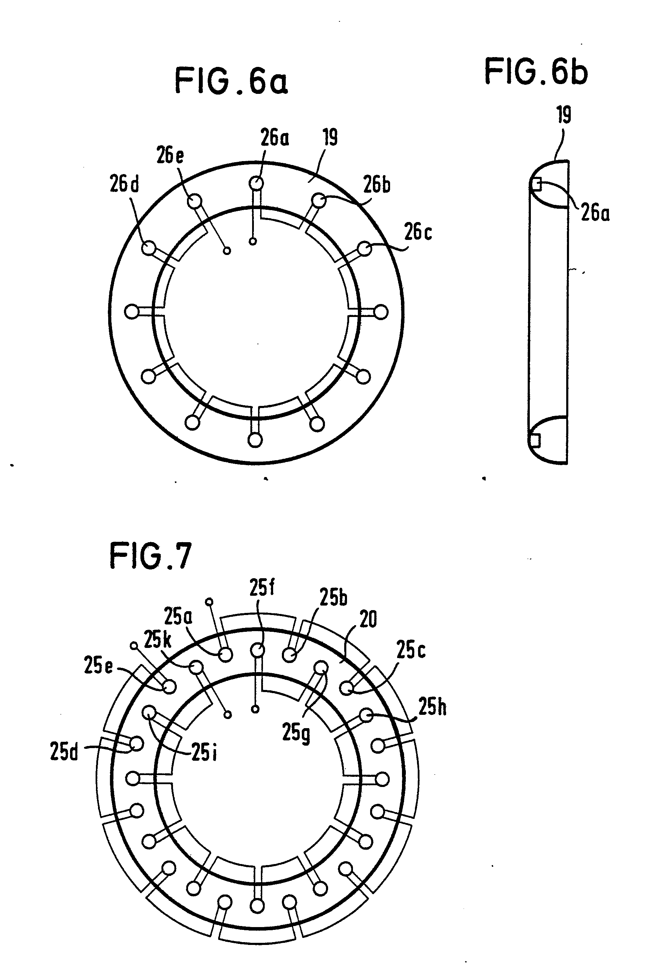

Die Fig. 6a und 6b zeigen den Reflektorring (19) der ersten Wandlereinrichtung mit den in der Scheitellinie der Halb-Ellipse angeordneten Laserdioden (26a, 26b, 26c, ... 26d und 26e).

Fig. 7 zeigt den halb-elliptischen Ringreflektor (20) mit den beiden Solarzellengruppen (25a, 25b, 25c ... 25d und 25e) sowie (25f, 25g, 25h ... 25i und 25k). Die beiden Solarzellengruppen sind so angeordnet, daß die einzelnen Solarzellen der einen Gruppe mittig zwischen den Solarzellen der anderen Gruppe liegen.

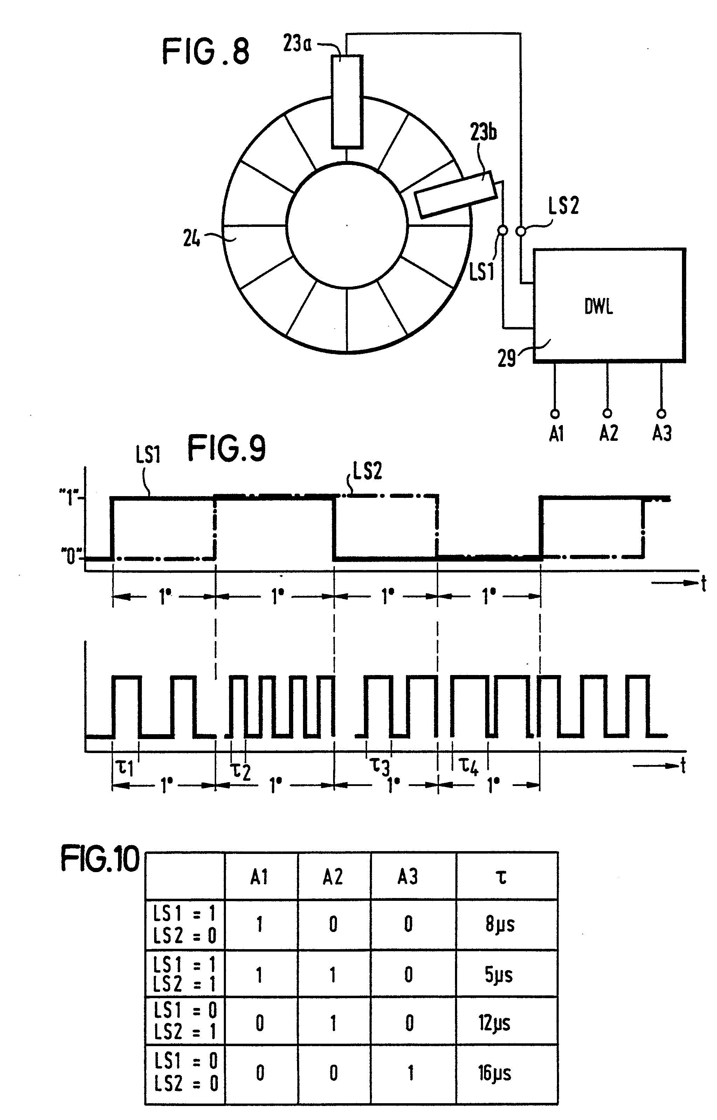

In Fig. 8 ist die Impulsscheibe (24) dargestellt, die mit den beide Lichtschranken (23a und 23b) zusammenarbeitet. Die beiden Lichtschranken (23a und 23b) sind so angeordnet, daß sie im Bezug auf die Lückenfrequenz der Impulsscheibe (24) um 90 1 versetzt sind. Die beiden Ausgänge der Lichtschranken (23a und 23b) sind mit den Eingängen LS1 und LS2 der Drehwinkellogik (29) verbunden.

In Fig. 9 sind die Rechteck-Impulsverläufe and den Eingängen LS1 und LS2 zu sehen, wobei beide Impulszüge untereinander um 901 versetzt sind. Jede Anstiegsflanke und jede Abstiegsflanke der beiden Impulszüge markiert einen Winkelschritt von je 11. Die Impulslogik (29) ist derart aufgebaut, daß sie ausgangsseitig und den Ausgängen A1, A2 und A3 logische Impulssignale erzeugen, die aus der Wahrheitstabelle von Fig. 10 ersichtlich sind. Gemäß der Wahrheitstabelle von Fig. 10 ergeben sich vier logische Signalkombinationen, wobei jede Signalkombination einer vorgegebenen Impulsweite zugeordnet ist. Die erste Signalkombination entspricht einer Impulsweite von 8 $\mu$sec., die zweite Signalkombination entspricht einer Impulsweite von 5 $\mu$sec., die dritte Signalkombination entspricht einer Impulsweite von 12 $\mu$sec., während die vierte Signalkombination einer Impulsweite von 16 $\mu$sec. entspricht. Auf diese Weise können vier Winkelschritte durch entsprechende Impulsweite voneinander unterschieden werden. Im unteren Teil von Fig. 9 sind die entsprechenden Impulse mit den zugehörigen Impulsweiten dargestellt.

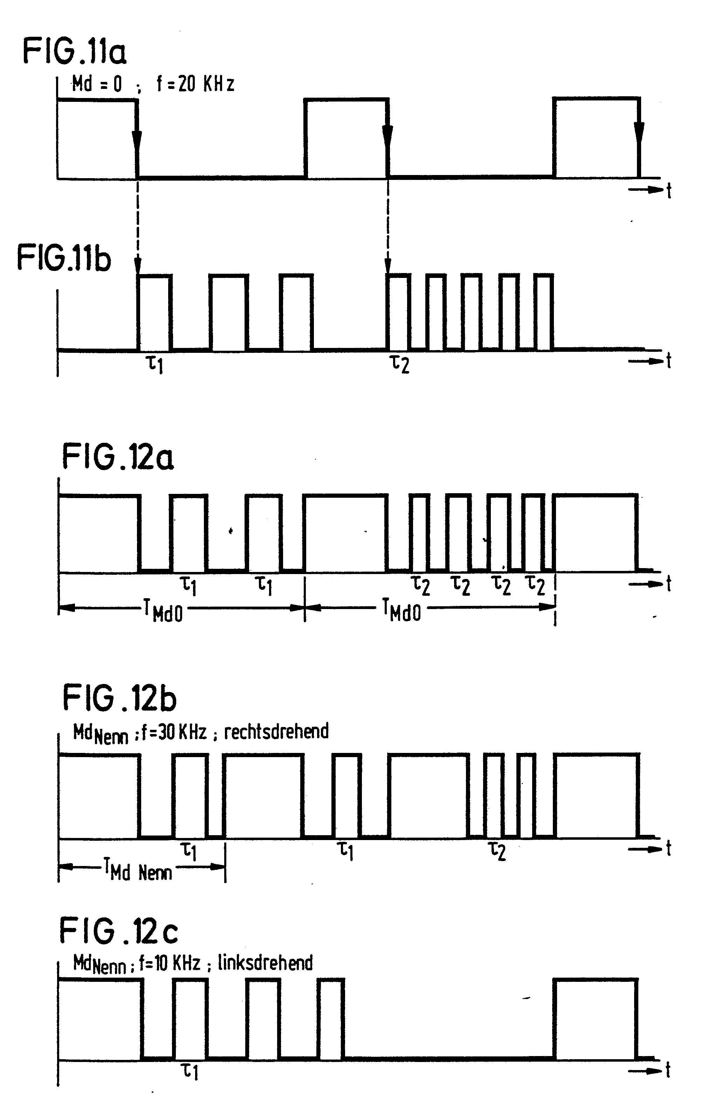

In Fig. 11a sind die Drehmomenten-Digitalimpulse für das Drehmoment Md = 0 gezeigt, wobei angenommen wird, daß die Frequenz für dieses 0-Drehmoment = 20 kH ist. Gemäß Fig. 4 werden durch die Flanken (Abstiegsflanken) der Drehmomentenimpulse die entsprechenden Schaltungsteile der Drehwinkellogik (29) getriggert. Dies ist aus Fig. 11b ersichtlich.

In Fig. 12a ist eine Impulsfolge für das Drehmoment MD = 0 am Ausgang A der Frequenzmodulations-und Impulsweitenmodulationsstufe (30) gezeigt. Die Frequenz der Drehmomentenimpulse ist durch die Periodendauer $T_{Mdo}$ gekennzeichnet. Für die Winkeldrehung 11 weisen die in der Impulspause des ersten Drehmomentenimpulses liegenden Drehwinkelimpulse die Impulsweite $\tau_1$ auf Beim nächstfolgenden Drehmomentenimpuls liegen bei weiterer Drehung der Meßwelle um 11 Drehwinkelimpulse mit der Impulsweite von $\tau_2$ in der nachfolgenden Impulspause. In der Impulspause des darauffolgenden Drehmomentenimpulses würden dann Drehwinkelimpulse mit der Impulsweite $\tau_3$ liegen usw.

In Fig. 12b ist der Impulsverlauf für das Nenndrehmoment $M_{dNenn}$ dargestellt für eine Frequenz f = 30 kHz. In diesem Falle ist die Periodendauer $T_{MdNenn}$ für das Nenndrehmoment entsprechend kürzer. Hierbei erfolgt eine Rechtsdrehung.

Gemäß Fig. 12c ist bei linksdrehender Meßwelle die Nenndrehmoment-Frequenz gleich 10 kHz. Das bedeutet, daß bei linksdrehender Meßwelle ein erster Frequenzbereich zwischen 10 kHz und 20 kHz und bei rechtsdrehender Meßwelle ein zweiter Frequenzbereich zwischen 20 kHz und 30 kHz zur Drehmomentenmessung wirksam wird.

Die seriellen Impulsfolgen werden dann in den nachfolgenden Schaltungseinheiten (5) und (6) ausgewertet und auf dem Monitor (7) dargestellt.

**Ansprüche**

1. Vorrichtung zur Messung von Parametern von sich drehenden Teilen mit jeweils einer auf dem Drehteil vorgesehenen elektrischen Parameter-Detektorvorrichtung und einer Impulserzeugungsschaltung, deren Signale eine von der Parametergröße abhängige Frequenz aufweisen, mit einer ersten Wandlereinrichtung zur berührungslosen Übertragung einer Versorgungsspannung vom stationären Vorrichtungsteil zur Parameter-Detektorvorrichtung und zur Impulserzeugungsschaltung des Drehteils, und mit einer zweiten Wandlereinrichtung zur berührungslosen Übertragung der Parameterimpulse zu einer stationären Auswerteschaltung, dadurch **gekennzeichnet,** daß
-die erste und zweite Wandlereinrichtung (25, 26 und 27, 28) jeweils ringförmig angeordnete elektro-optische bzw. opto-elektrische Wandlerelemente (25a bis 25k, 26a bis 26e und 27a bis 27c, 28a bis 28c) aufweist, wobei die Wandlerelemente der ersten Wandlereinrichtung (25, 26) derart ausgebildet und angeordnet sind, daß während der Drehung auf der Drehteilseite eine Gleichspannung mit einer Welligkeit, die klein ist gegenüber dem Maximalwert der Gleichspannung, zur Parameter-Detektoreinrichtung (15) und Impulserzeugungsschaltung (26) übertragen wird,

-daß eine Drehwinkel-Detektorvorrichtung (23, 24) für das Drehteil (12) zur Lieferung von Drehwinkelimpulsen vorgesehen ist und

-daß eine Modulationsschaltung (30) vorhanden ist, die eine Frequenz-Modulationsstufe für die Parameterimpulse sowie eine durch die Parameterim-pulse flanken-getriggerte Impulsweiten-Modula-tionsstufe für die Drehwinkelimpulse des Drehteils aufweist, und die ausgangsseitig serielle Parameterimpulse liefert, in deren jeweiligen Pausenphasen die impulsweiten-modulierten Drehwinkelimpulse liegen.

2. Vorrichtung nach Anspruch 1, dadurch **gekennzeichnet,** daß die erste und zweite Wandlereinrichtung (25, 26 und 27, 28) jeweils ringförmige, einander zugekehrte Reflektoren (19, 20 und 21, 22) aufweist, in denen die elektro-optischen bzw. opto-elektrischen Wandlerelemente (25a bis 25k, 26a bis 26e und 27a bis 27c, 28a bis 28c) angeordnet sind, wobei die Abstände (A, B) der einzelnen Wandlerelemente in der ersten Wandlereinrichtung (25, 26) untereinander entsprechend gewählt sind.

3. Vorrichtung nach Anspruch 1 oder 2, dadurch **gekennzeichnet,** daß die opto-elektrischen Wandlerelemente (25a bis 25k) der ersten Wandlereinrichtung (25, 26) als Aktivelemente in Reihe geschaltet sind.

4. Vorrichtung nach einem der Ansprüche 1 bis 3, dadurch **gekennzeichnet,** daß die elektro-optischen Wandlerelemente Laserdioden (26a bis 26e und 27a bis 27c) und die opto-elektrischen Wandlerelemente der ersten Wandlereinrichtung (25, 26) Solarzellen (25a bis 25k), und die opto-elektrischen Wandlerelemente (28a bis 28c) der zweiten Wandlereinrichtung Photodioden, Phototransistoren oder Photowiderstände sind.

5. Vorrichtung nach einem der vorhergehenden Ansprüche, dadurch **gekennzeichnet,** daß die Abstände (A, B) der einzelnen Wandlerelemente (26a bis 26e und 25a bis 25k) der ersten Wandlereinrichtung derart sind, daß die durch ihre Richtcharakteristik bedingten Intensitätsschwankungen während der Drehung des Drehteiles (12) kleiner oder gleich 10 % vom Maximalenergiewert sind.

6. Vorrichtung nach einem der vorhergehenden Ansprüche, dadurch **gekennzeichnet,** daß die opto-elektrischen bzw. elektro-optischen Wandlerelemente in jeweils gleichen radialen Abständen angeordnet sind.

7. Vorrichtung nach einem der vorhergehenden Ansprüche, dadurch **gekennzeichnet,** daß die ringförmigen Reflektoren (19, 20, 21, 22) jeweils einen halb-elliptischen Querschnitt aufweisen, und daß die opto-elektrischen bzw. elektro-optischen Wandlerelemente (25a bis 25k; 26a bis 26e; 27a bis 27c; 28a bis 28c) jeweils im Bereich des Scheitelpunktes oder Brennpunktes der Reflektoren (19, 20, 21, 22) angeordnet sind.

8. Vorrichtung nach einem der vorhergehenden Ansprüche, dadurch **gekennzeichnet,** daß die drehteilseitig übertragene Gleichspannung durch eine Glättungsstufe (34) stabilisiert und nachfolgend einem Halbleiterschalter (35) zugeführt wird, welcher durch einen Taktgenerator (36) mit festem Impulsphasen-Impulspausen-Verhältnis angesteuert wird.

9. Vorrichtung nach Anspruch 8, dadurch **gekennzeichnet,** daß durch den Taktgenerator (36) eine Abtast-und Halteschaltung (43, 44, 45, 46, 47) der Impulserzeugerschaltung getaktet wird.

10. Vorrichtung nach Anspruch 8 oder 9, dadurch **gekennzeichnet,** daß das Impulsphasen-Impulspausen-Verhältnis der Impulse des Taktgenerators (36) 20:80 beträgt.

11. Vorrichtung nach Anspruch 9 oder 10, dadurch **gekennzeichnet,** daß die Abtast-und Halteschaltung eingangsseitig mit durch den Taktgenerator (36) steuerbaren Halbleiterschaltern (41, 42) versehen ist, welche im Takt der Impulse des Taktgenerators (36) die Abtast-und Halteschaltung eingangsseitig durchsteuern und sperren.

12. Vorrichtung nach einem der Ansprüche 9 bis 11, dadurch **gekennzeichnet,** daß die Abtast-und Halteschaltung aus zwei Speicherstufen (43, 44) mit je einem nachgeordneten Operationsverstärker (45, 46) besteht, und daß die beiden Operationsverstärker mit je einem Eingang einer Differenzstufe (47) verbunden sind.

13. Vorrichtung nach einem der vorhergehenden Ansprüche, dadurch **gekennzeichnet,** daß eine Parameter-Prüfstufe mit einem elektrischen Kalibrierelement (64) mit vorgegebenem Wert vorgesehen ist, welches der Parameter-Detektorvorrichtung (15) während der Kalibrierung zugeschaltet ist.

14. Vorrichtung nach Anspruch 13, dadurch **gekennzeichnet,** daß das elektrische Kalibrierelement (64) durch eine Logikschaltung (62, 63) wirksam schaltbar ist, wenn in einer Vergleichsstufe die Gleichheit eines über die erste Wandlereinrichtung übertragenen Kalibriersignales mit einem Kalibrier-Sollwertsignal festgestellt wird.

15. Vorrichtung nach Anspruch 14, dadurch **gekennzeichnet,** daß das Kalibriersignal eine Impulsfolge mit einer vorgegebenen Frequenz und einem vorgegebenen Tastverhältnis ist, und daß die Kalibrierimpulsfolge der Versorgungsgleichspannung überlagert und vor der der Parameter-Detektorvorrichtung (15) und der Impulserzeugungsschaltung (26) vorgeschalteten Glättungsstufe (34) abgezweigt wird.

16. Vorrichtung nach einem der Ansprüche 13 bis 15, dadurch **gekennzeichnet,** daß das Kalibrierelement (64) ein Festwiderstand ist, der mittels eines durch das Kalibriersignal steuerbaren Halbleiterschalters (63) zur Parameter-Detektorvorrichtung (15) zuschaltbar ist.

17. Vorrichtung nach einem der Ansprüche 13 bis 16, dadurch **gekennzeichnet,** daß das Impulsphasen-Impulspausen-Verhältnis der Kalibrierimpulse 90:10 beträgt.

18. Vorrichtung nach einem der Ansprüche 13 bis 17, dadurch **gekennzeichnet,** daß die Kalibrierimpulse im stationären Teil der Meßvorrichtung erzeugt werden.

19. Vorrichtung nach einem der vorhergehenden Ansprüche, dadurch **gekennzeichnet,** daß die Modulationsschaltung entweder auf dem Drehteil oder stationär angeordnet ist.

20. Vorrichtung nach einem der vorhergehenden Ansprüche, dadurch **gekennzeichnet,** daß die von der Parametergröße abhängige Frequenz der Parameterimpulse bei konstanter Impulsphasenzeit durch Änderung der Impulspausenzeit mittels einer Steuerstufe (48, 49, 50, 51) gesteuert wird.

21. Vorrichtung nach einem der vorhergehenden Ansprüche, dadurch **gekennzeichnet,** daß die Drehwinkel-Detektorvorrichtung (23, 24) eine durch die Drehmomentensignale getaktete Drehwinkellogikstufe (29) aufweist, die ausgangsseitig winkelschrittweise n-bit-Digitalsignale abgibt, durch die nacheinander Zeitglieder (58, 59, 60, 61) mit entsprechender Zeitkonstante für die jeweilige Impulsweite einschaltbar sind.

22. Vorrichtung nach einem der vorhergehenden Ansprüche, dadurch **gekennzeichnet,** daß die Meßvorrichtung als Aktionsaufnehmer für ein Schraubwerkzeug verwendet wird und zur winkelabhängigen Drehmomentenmessung zwischen einem Schraubwerkzeuggetriebe und einem Schraubwerkzeugabtrieb einsetzbar ist.

# FIG .1

# FIG .2

# FIG . 3

# FIG.4

0 260 531

# FIG.5

FIG.6a

FIG.6b

26a 19

26e

26d 26b

26c

19

26a

FIG.7

25f

25a 25b

25k 20

25e 25c

25d 25h

25g

25i

FIG.8

FIG.9

FIG.10

| | A1 | A2 | A3 | $\tau$ |
|---|---|---|---|---|
| LS1 = 1<br>LS2 = 0 | 1 | 0 | 0 | 8µs |
| LS1 = 1<br>LS2 = 1 | 1 | 1 | 0 | 5µs |
| LS1 = 0<br>LS2 = 1 | 0 | 1 | 0 | 12µs |
| LS1 = 0<br>LS2 = 0 | 0 | 0 | 1 | 16µs |

## FIG.11a

Md = 0 ; f = 20 KHz

## FIG.11b

$\tau_1$     $\tau_2$

## FIG.12a

$\tau_1$   $\tau_1$    $\tau_2$ $\tau_2$ $\tau_2$ $\tau_2$

$T_{Md0}$     $T_{Md0}$

## FIG.12b

Md$_{Nenn}$ ; f = 30 KHz ; rechtsdrehend

$\tau_1$    $\tau_1$    $\tau_2$

$T_{Md\,Nenn}$

## FIG.12c

Md$_{Nenn}$ ; f = 10 KHz ; linksdrehend

$\tau_1$